# EUROPEAN PATENT SPECIFICATION

(11) **EP 1 511 589 B1**
(45) Date of publication and mention of the grant of the patent: **30.11.2005**
(21) Application number: 02774727.8
(22) Date of filing: 17.10.2002
(51) Int. Cl.: B22C 9/08, B01D 29/03, B01D 29/56

(54) **FILTER DEVICE FOR MOLTEN STEEL FILTRATION**
FILTERVORRICHTUNG ZUR FILTRATION VON STAHLSCHMELZE
DISPOSITIF DE FILTRE POUR FILTRATION D'ACIER EN FUSION

(30) Priority: 03.06.2002 EP 02012189
(43) Date of publication of application: 09.03.2005
(73) Proprietor: VESUVIUS CRUCIBLE COMPANY, Wilmington, DE 19803 (US)
(72) Inventor: JUMA, Kassim, Church Lange, Staffordshire ST18 0YP (GB)
(74) Representative: Debled, Thierry
(86) International application number: PCT/EP2002/011626
(87) International publication number: WO 2003/101644

(56) References cited:
- EP-A- 0 490 371
- WO-A-01/40414
- US-A- 4 395 333
- US-A- 4 721 567
- US-A- 5 785 851
- US-B1- 6 216 768

## Description

The present invention relates to a filter device for molten steel filtration and a process for the preparation thereof.

For the processing of molten metals, in particular steel, it is desirable to remove exogenous intermetallic inclusions such as from impurities of the raw materials, from slag, dross and oxides which form on the surface of the melt and from small fragments of refractory materials that are used to form the chamber or vessel in which the molten metal melt is formed.

Removal of these inclusions forms a homogenous melt that insures high quality of products especially in the casting of steel, iron and aluminum metals. Currently, ceramic filters are widely used due to their high ability to withstand extreme thermal shock due to their resistance to chemical corrosion and their ability to withstand mechanical stresses.

The production of such ceramic filters generally involves the mixing of ceramic powder with suitable organic binders and water in order to prepare a paste or slurry. The slurry is used to impregnate a polyurethane foam which subsequently is dried and fired at a temperature in the range of from 1000 to 1700 °C. By this treatment the combustible material is burned off during sintering to produce a porous body. US-A-2,460,929 and US-A-2,752,258 may serve as examples for the common procedure.

Also, an open pore filter that instead of a random distribution of irregular interconnecting passages consists of a series of parallel ducts passing through the material as generally being made by hydraulic pressing a damp ceramic powder and organic binder into a mold containing perpendicular pins. A perforated structure is thus obtained which can be in the form of a disk or block. The perforated article is then fired at a temperature in the range of from 1000 to 1700 °C depending on the final application to produce a perforated disc. During firing a ceramic and/or glassy bond is developed.

US-A-4,721,567 relates to a ceramic pouring filter for use in the casting of molten metal comprises a number of closely spaced apertured elements defining filtering cavities there between with their apertures staggered so that the metal flowing out of the apertures of one element passes through a restriction before entering the apertures of the next element. This patent describes a ceramic filter with all the disadvantages of high thermal mass, susceptibility to thermal shock, creep and thermal degradation. The filter consists of two or more separate parts which are not joint together. There is no space or chamber created between the layers when the filter is finally assembled. There is also stipulation regarding the spaces between holes as well as the holes diameter. This filter is particularly expensive to make with many shortcomings.

US 6,216,768 B1 relates to the ratio of the number of free holes in the filtering plate, located in the areas which are not covered by the insert of treating material, on the one hand, to the total number of holes in said filtering plate on the other hand, is not less than 10 % and/or not above 75 %. This filter is designed particularly for iron inoculation. It is only suitable for iron casting. It is supplied un-jointed as two pieces. It is assembled by the customer at the point of casting. It is made of ceramic and utilizes as casket placed between the two halves.

US-A-5,785,851 describes a reticulated ceramic filter for molten metal which has an inlet portion with an inlet surface, an intermediate body portion contiguous with the inlet portion and an outlet portion with an outlet surface. The inlet surface is non-planar with upper surfaces and lower surfaces to provide an substantial contact area for molten metal supplied to the inlet surface. This patent concerns a foam filter with some modification of the surface of the foam. An upper perforated plate may be placed on top of the foam filter which acts as a prefilter. Practically this filter does not work due to excessive chilling of the metal during casting since the metal has to pass through the ceramic prefilter as well as the ceramic filter Also the patent does not explain what kind of mechanism is used to join the prefilter to the foam filter.

Furthermore, WO 01/40414 A1 is related to a porous coal-based material is provided having a density of between about 0.1 gram per cubic centimeter and about 0.6 gram per cubic centimeter produced by the controlled heating of small coal particulate in a "mold" and under a non-oxidizing atmosphere. The porous product thereby produced, preferably as a near net shape, can be machined, adhered and otherwise fabricated to produce a wide variety of low cost, low density products, or used in its performed shape as a filter, heat or electrical insulator etc. These said porous products without further treatment exhibit compressive strengths of up to about 6000 psi. Further treatment by carbonization or graphitization of said porous products yield products that can be used as electrical or heat conductors. This patent concerns a foam with mostly close and random porosity. It is difficult to mass produce due to the limitation of using a steel mould. The only filtration application cited is for aluminium metal only manufacturing of this foam requires controlled pressure and atmosphere. This patent depends on regulating the pressure inside the mould to obtain porous structure. Also the porosity in this case is not fully open. The claim of filtration usage is one of many usage and there is no prove that the filter was ever actually used to metal filtration. Also only aluminum was mentioned for filtration since such filter is too weak for steel filtration. The patent describes only a carbon filter without any ceramic. The process of making the filter is based on regulating the pressure inside the mould. This process is difficult to control.

US-A-4,395,333 describes an improved filter element for use in an apparatus for filtering molten metal, and to the method of making such filter element. The apparatus consists of a filtering vessel fitted with a filter element. In one embodiment of the present invention the improved filter element is pre-wet with metal prior to the filtering apparatus being introduced into service. In a second embodiment of the present invention the improved flier element is reinforced with one or more reinforcing members. The improved filter element can be used in filtering vessels having a variety of designs. This filter is for aluminium only. It is made of ceramic and is enforced by ceramic structure. The main objective of this patent is to improve the mechanical integrity of the filter during usage in aluminium filtration.

EP 0 490 371 A2 relates to a method of treating molten aluminum containing particles therein to remove the particles from the molten aluminum comprises passing molten aluminum through a first rigid filter media having a first surface to remove a fraction of the particles, collecting said particles on said first surface as filter cake, the particles capable of being removed from said surface by contacting the filter cake with gas bubbles and passing said molten aluminum through a second rigid filter media to remove particles therefrom having a size generally smaller than the particles removed by the first media. An apparatus useful for filtering molten metal comprises a rigid coarse filter and a rigid fine filter. This patent is for aluminium filtration only. The two filters are both ceramic foam filters and not joint together.

US-A-4,514,346 uses phenolic resin to react with silicon at high temperature to form silicon carbide. There is no carbon bonding involved. This patent is for making porous silicon carbide only. Temperature in excess of 1600 °C is used to obtain silicon carbide. The process is non-aqueous. The porosity obtained from this process is closed porosity which has no use in filtration requiring open porosity.

GB-A 970 591 deals with making high density low permeability graphite articles. It uses an organic solvent, namely furfuryl alcohol as solvent and not water. Binder in the form of pitch is used at 25 % with no ceramic at all. Final heating is in excess of 2700 °C. The porosity is closed porosity rather than open porosity.

US-A-3,309,433 describes a method for manufacturing high density graphite. It uses hot pressing as a means to obtain high density graphite articles for nuclear applications. It used special material called Dibenzanthrone to bind the graphite. It has no useful application in metal filtration field. It does not use any ceramic in the process. It uses high temperature of up to 2700 °C.

EP 0 251 634 B1 describes an appropriate process for making defined porous ceramic bodies having smooth walled cells formed by the pore formers, and pores with round edges, which interconnect the cells.

US-A-5,520,823 relates to filters for aluminum only. The bonding is obtained using borosilicate glass. Firing is carried out in air and a considerable amount graphite would be lost due to the oxidation by air. Filters used for aluminum filtration are usually fired at around 1200 °C while those intended for the use of iron are fired at temperatures of 1450 °C and for steel at above 1600 °C.

Despite their wide spread use for metal, in particular steel, filtration ceramic filters of the above mentioned types have several drawbacks that limit their applicability:
1. Ceramic filters, although preheated, tend to be clogged by freezing particles on the first contact with the molten metal. For this purpose usually superheated molten metal that is metal at a temperature of about 100 °C over liquidus temperature is used for casting to prevent clogging of the filters. This practice is extreme wasteful in terms of energy and cost and any improvement that reduces processing temperature of the molten metal is of great benefit. Carbon coatings have been applied in the prior art on the surface of ceramic filters to reduce the thermal mass of the part that comes into direct contact with the molten metal.
   Also an exothermically reacting thermite material applied to a carbon-coated surface of the ceramic filter has been proposed by EP 0 463 234 B1. The latter solution, while reducing the temperature necessary for the flow of the molten metal, adds to the cost of production of the filters and very narrowly limits the applicability as the thermite coating has to be in compliance with the type of molten metal for which it is used.
   Anyway, both carbon and thermite coating serve in overcoming the drawback of high thermal mass of the ceramic filter while the challenge of several more disadvantages is not met.
2. Ceramic and glassy type bonds tend to soften and creep at high temperature which very often results in erosion of the filter and subsequent contamination of the melt.
3. Cracking due to thermal shock or chemical (reductive) corrosion by the hot metal melt is a problem often encountered with ceramic and glass bonded filters.
4. The need for extremely high firing temperatures, especially in the case of ceramics intended for steel filtration, is a severe drawback of conventional ceramic filters which is even worse when the need for high cost - ceramic raw material is considered.
5. In addition, the use of zirconia with its relatively strong background radiation is hazardous and should be avoided.
6. Large size zirconia filters are difficult to produce due to high shrinkage during firing.
7. The burning of polyurethane foam during the manufacturing process of foam filters causes pollution to the environment by hazardous gases.

Co-pending EP-A1-1288178 filed on 01. September 2001, relates to a ceramic filter suitable for molten metal filtration comprising a bonded network of graphitized carbon. Carbon bonded ceramics In general are weak and suffers from low mechanical strength. The carbon bonded filters according to this reference have a limited mechanical strength which causes problems during transportation and usage and limit the capacity of the filters in withstanding the pressure of molten metal on it.

Also these filters are friable and tends to break Into bits which falls in the mould prior to casting causing contamination of the casting.

Co-pending application EP 02 012 031, filed on May 31, 2002 relates to a carbon bonded filter being reinforced by the presence of ceramic fibers, glass fibers, organic fibers, carbon fibers, metal fibers and mixtures thereof.

The object of the present invention is thus to provide a filter device 1 for metal which overcome the above mentioned drawbacks. In particular, the above mentioned points 1. to 3. It is also an object of the invention to provide a filter with improved slug removal, improved break of the stream of molten metal, in particular steel, cheaper to produce with no limitation on size. The manufacturing of such filter should be more environmentally friendly by avoiding burning of polyurethane foam.

In a first embodiment, the invention relates to a filter device 1 comprising a bonded network of graphitized carbon for molten metal, in particular steel, filtration characterized by the presence of at least two sieve plates 2,4 each having a corrugated surface (6,6a) (peaks and trough) and a protruding frame (5,5a) joined to each other the protruding frame spaced apart to each other providing a reservoir chamber 7.

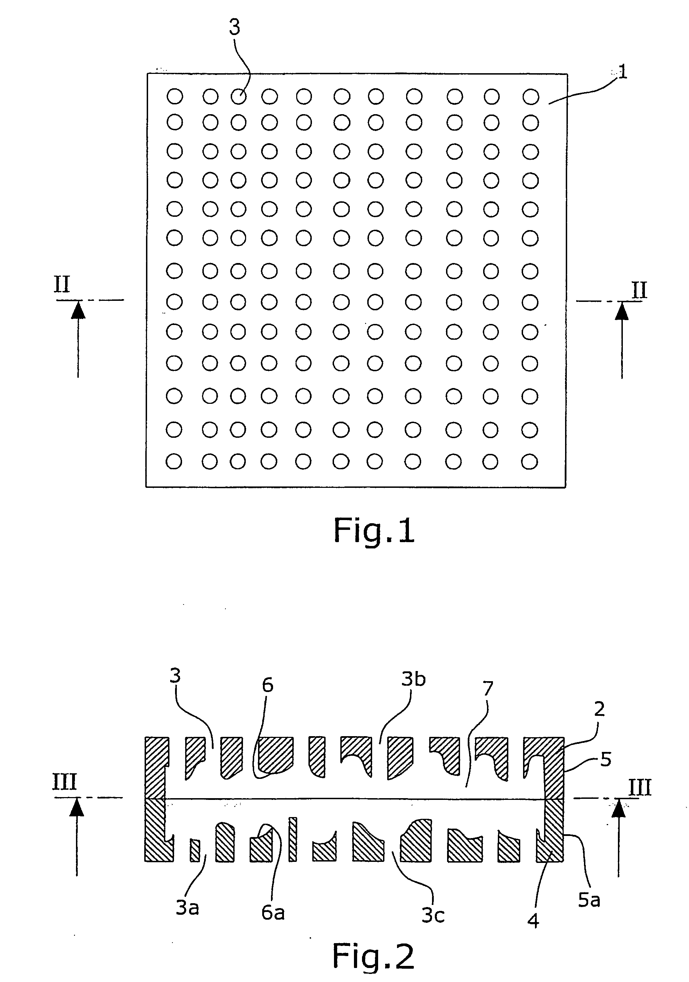

Fig. 1 is the top view of a filter device 1 according to the present invention. The device 1 is of square geometry, however it can be made of any other geometry such as rectangular, circle etc. The upper sieve plate 2 and the lower sieve plate 4 (not shown) contains a series of holes 3 allowing molten metal, in particular steel, to be filtered. The sieve plates 2, 4 to from a reservoir chamber 7 reducing the velocity of the flow of molten metal by unifying the single flows resulting from the series of holes 3 and dividing the contest of the reservoir chamber 7 again to a series of single flows of molten metal, in particular steel, by passing the lower sieve plate.

Fig. 2 is a cross-section of the filter device 1 according to Fig. 1. Two sieve plates 2,4 are located spaced apart to each other. The distance between the sieve plates 2,4 is provided by each a frame 5,5a ensures that the inner surfaces 6,6a of the sieve plates 2,4 facing together are not in contact with each other in particular during use of the filter device 1 for molten metal, in particular steel, filtration. The connection between the two frames 5,5a can be established for example by a high temperature ceramic or carbon bond. Although Fig. 2 Illustrates the presence of two sieve plates 2,4 facing the inner surfaces 6,6a of each other, the lower or the upper sieve 2,4 can be turned in a way that the frame 5,5a of one sieve 2,4 is bonded directly to the next one under the proviso that at least one reservoir chamber 7 is present. In the same way, three or more sieve plates 2,4 is may be combined.

The sieve plates 2,4 contain several through holes which do not necessarily have to be in direct flow direction like holes 3 and 3a. For example the through holes 3b and 3c are spaced laterally and do not allow a direct flow of the molten metal. The upper sieve plate 2 has a corrugated surface 6 (peaks and troughs) with a high surface irregularity or surface roughness which acts to increase the residence time of the molten metal, for example steel, in the space (reservoir chamber) between the first and second sieve plate 2,4, and also to increase the surface area of the filter. Said corrugated surface 6,6a can be made by impression in the steel tools used to press the filters.

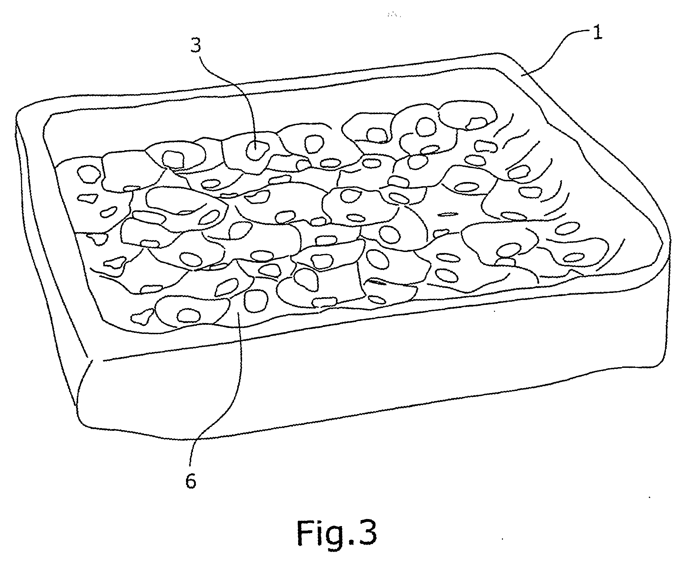

Fig. 3 illustrates the roughness of the surface 6,6a of a sieve plate 2,4 by series of peaks and troughs. The inner surfaces 6,6a of the two plates 2,4 are corrugated while the outer surfaces of the two sieve plates 2,4 could be corrugated although this may contribute to the complexity of the pressing tools.

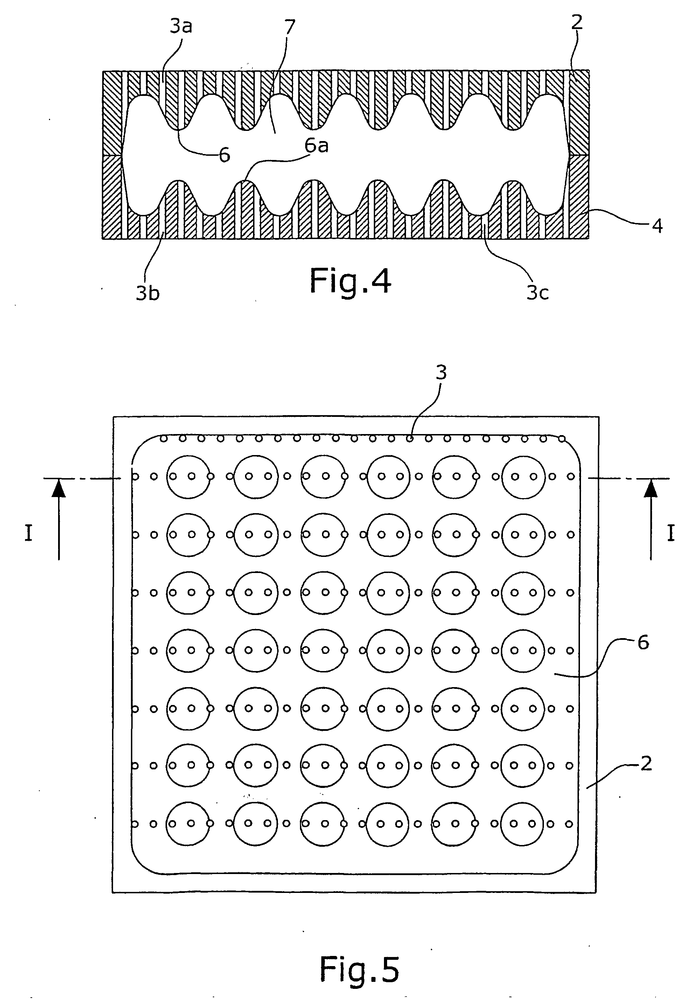

Fig. 4 illustrates a filter device quite similar to that of Fig. 1. However, the inner surfaces 6, 6a of the reservoir camber 7 are not roughened but has a defined three-dimensional geometry like hills and valleys providing the same effect of lowering the velocity of the flow of molten metal, in particular steel, passing the holes 3, 3a, 3b.

Fig. 5 illustrates a top view of a sieve plate 2, 4 depicted in Fig. 4.

The filter device 1 can be made of any material which is commonly known in the field of filtering molten metal such like Alumina, Silica, Zirconia, Magnesia, clay, mica, pyrophilite, mullite, or any other material used in the art of ceramic manufacturing. Preferably the filter device 1 is made of ceramic material, in particular of ceramic material comprising a network of graphitized carbon and optionally containing fibers. The use of a ceramic free material however, has the advantage of a better reusability in that the molten metal is not contaminated by the ceramic material.

The term "graphitizable" means that the carbon bonding obtained by pyrolysis of the carbon precursor can be converted into a graphite like bonding on heating to a higher temperature in the absence of air. Graphitizable carbon is distinguished from that of a glassy carbon by the fact that it is impossible to convert glassy carbon to a graphite like bond no matter how high temperature it was heated to.

Carbon bonding of this type exhibits the following advantageous features:
- Significantly cheaper to produce.
- Firing can be carried out at much lower temperature in order to develop the full carbon bonding network from the carbon bond precursor. In general the filters have to be fired at a temperature in the range of from 500 °C to 1000 °C.
- Significantly lower superheat is required.
- Low thermal mass.
- Better thermal shock resistance.
- Contamination free.

The filter devices 1 according to the present invention exhibit a relatively low thermal mass. A result of this is that there is no need to overheat the metal, in particular steel, to be filtered which reduces energy consumption.

Adding up to 20% by weight of fibers to the filter recipes contribute to a significant improvement in the performance of the filters. The improvement is mainly due to increase mechanical strength, improve stiffness, higher impact resistance and better thermal shock. The improvement is manifested it self by increase filtration capacity, better mechanical integrity and less contamination to the steel casting. Also because of the increase in mechanical strength due to the use of fibers, the whole weight of the filter can be reduced resulting in reducing costs and improved efficiency of the filter.

Due to the outstanding mechanical strength of the carbon bonding in combination with fibers at high temperature no softening or bending can take place during the process of metal casting. This contributes to an even cleaner metal cast.

Graphitizable carbon bonded filter devices containing fibers according to the present invention offer the following advantages compared with glassy carbon bonded filters:
- High oxidation resistance
- High mechanical strength
- High impact resistance
- Low microporosity
- Low specific surface
- Structural flexibility
- Non-brittle behavior
- Economical use.

Traditionally, fibers are added to ceramic and composite materials in order to improve mechanical strength and gives stiffness to the articles. These fibers could be either metal fibers, organic fibers such as polyester fibers, viscose fibers, polyethylene fibers, polyacrylonitrile (PAN) fibers, aramid fibers, polyamide fibers, etc., or ceramic fibers such as aluminosilicate fibers, alumina fibers or glass fibers, or carbon fibers which consist of 100% carbon. All these types of fibers are used to a different degrees in ceramic to give added advantaged to the properties of ceramic such as high mechanical strength, high impact resistance and better thermal shock.

Adding of the types of fibers to the carbon bonded filters of the prior art causes a significant improvement in the mechanical strength of the filters as well as improvement in the impact resistance and thermal shock. The strength could be doubled as the result of using fibers. Impact resistance and thermal shock resistance also increase accordingly. As a result, filter device 1s can now at least double their filtration capacity. For example a carbon filter made of a single sieve plate 2 with 100mmx 100mm x 20mm which have a normal capacity of 100 kg filtration of steel, the same filter device 1 doubled by two sieve plates 2,4 has a capacity to filter 200 kg of steel. Furthermore the stream of molten metal is much broader when leaving the filter device 1 and thus has a lower velocity.

For optimal performance the graphitized carbon that constitutes the bonded network according to the present invention should be present in an amount up to 15 % by weight of the filter, preferably up to 10 % by weight, even more preferred in an amount of at least 2 % by weight up to 5 % by weight.

In a further embodiment of the present invention the filter devices according to the present invention are produced by a process comprising the steps:
a) pressing a semi-damp mixture comprising ceramic powder and optionally a graphitizable bonding precursor, fibers and other additives in a hydraulic press to obtain a perforated sieve plate 2,4 in the shape of a disk with a protruding frame 5,5a, with a corrugated surface 6,6a peaks and trough or hills and valleys) of at least one of the inside surfaces 6,6a of the sieve plate 2,4,
b) joining two sieve plates 2,4 to each other using a ceramic or carbon binder so that a space (reservoir chamber) is formed between the two sieve plates 2,4 and
c) firing the assembled filter in reducing or non-oxidising atmosphere to a temperature up to 1000 °C , preferably between 600 °C and 700 °C.

In an alternative procedure, the sieve plates 2,4 are first separately fired and thereafter jointed to each other.

The surface roughness of the inner surface 6 of the sieve plates 2,4 may be obtained by roughening a smooth surface or by pressing directly the geometry in the desired roughness or geometry with a stamp providing a corrugation or height difference between the peaks and troughs (hills and valleys), hills and valleys of at least 0.1 mm to 10 mm, in particular 1 mm to 5 mm.

### Examples:

### Example 1

As graphitizable high melting pitch (HMP) a coal-tar pitch was used having a glass transition temperature of 210 °C, a coking value of 85 %, an ash value of 0,5 % and which is commercially available as a fine powder.

A mixture of 50 g of aluminosilicate ceramic fibers, 70 g of said high melting pitch powder, 900 g of ceramic powder (calcined alumina), 100 g of graphite powder, 20g PVA binder and 60 g of water was prepared in a Hobart or Eirich mixer. The aim of the mixing process was to make a semi-damp and homogenous mixture. A predetermined weight of the mixture was placed in a steel mold which contained vertical pins at the lower part and a corrugated surface 6,6a (peaks and troughs) at the upper part of the pressing tool. Pressing the mix produced a perforated sieve plate 2,4 with protruding frame 5,5a, flat surface at one side and a corrugated surface 6,6a at the other.

After pressing each two plates 2,4 are joined to each other in such a way that the two corrugated surfaces 6,6a facing each other and hence creating a space or reservoir chamber between them.

Thereafter, the resultant filter was fired an inert atmosphere at a temperature in the range of from 600 °C to 900°C for 20 to 120 min at a heating rated in the range of from 1 °C/min to 10 °C/min.

The fiber reinforced graphitizable carbon bonded perforated filter device 1 was used in a field trial to filter molten steel. It was found that the filter device 1 did not require molten metal superheat since it generated heat on contact of molten metal with the filter which was enough to keep the molten steel flow during filtration. This was due to the exothermic reaction of the filter surface and the molten steel. Also, the filter device 1 did not suffer from thermal shock or distortion during the test. These advantages open the door for improved economic and efficient filtration of casting steel.

## Claims

1. Filter device (1) for molten steel filtration having a bonded network of graphitized carbon, containing at least two sieve plates (2,4), each having a corrugated surface (6,6a) (peaks and trough) and a protruding frame (5,5a) joined to each other at the protruding frame by forming a space or reservoir chamber.

2. Device (1) according to claim 1, **characterized in that** at least one of the surfaces (6,6a) of said sieve plates (2,4) facing together has a surface corrugation in the range of 0.1 mm to 10 mm, in particular 1 mm to 5 mm.

3. Device (1) according to claim 1 or 2, **characterized** that the through holes (3,3a) of the respective sieves plates (2,4) are spaced laterally to each other.

4. Device (1) according to one of claims 1 to 3, **characterized in that** the diameter of the through holes (3,3a) of the respective sieve plates (2,4) is in the range of 1 to 10 mm, in particular 2 to 5 mm.

5. Device (1) according to one of claims 1 to 4, **characterized in that** the geometry of the through holes (3,3a) of said sieve plates (2,4) is circular, ellipitical, triangular, square, rectangular, pentagonal or hexagonal.

6. Device (1) according to one of claims 1 to 5, **characterized in that** the geometry of each of the sieve plates (2,4) is identical.

7. Device (1) according to one of claims 1 to 6, **characterized in that** the filter is made of ceramic raw material, in particular made of ceramic material comprising a network of graphitized carbon and optionally reinforcing fibers.

8. A method to produce a filter device (1) according to one of claims 1 to 7 comprising the steps
a) pressing a semi-damp mixture comprising ceramic powder and a graphitizable bonding precursor, fibers and other additives in a hydraulic press to obtain a first and second perforated sieve plate (2,4) in the shape of a disk with a protruding frame (5,5a), with a corrugated surface (6,6a) (peaks and trough) of at least one of the inside surfaces (6,6a) of the sieve plate (2,4),
b) joining said two sieve plates (2,4) to each other by the protruding frame (5,5a) using a ceramic or carbon binder so that a space or reservoir chamber (7) is formed between the two plates (2,4) and
c) firing the assembled filter device (1) in reducing or non-oxidizing atmosphere to a temperature up to 1000 °C , preferably between 600 °C and 700 °C.

9. The method according claim 8 **characterized in that** the surface (6,6a) is roughened in a further step prior or after the firing of the sieve plate (2,4).

10. The method according to claim 8 or 9 **characterized in that** said semi-damp mixture contains a graphitizable carbon bonding precursor, ceramic powder, and other additives.

11. The method according anyone of claims 8 to 10, **characterized in that** said precursor is fired at a temperature in the range of 500 to 2000 °C, in particular 500 to 1000 °C.

## Patentansprüche

1. Filtervorrichtung (1) zur Filtration von geschmolzenem Stahl mit einem gebundenen Netzwerk von graphitisiertem Kohlenstoff, enthaltend mindestens zwei Siebplatten (2,4), von denen jede eine gewellte Oberfläche (6,6a) (Erhebungen und Mulden) und einen vorstehenden Rahmen (5,5a) aufweist, die unter Bildung eines Zwischenraums oder einer Speicherkammer am vorstehenden Rahmen miteinander verbunden sind.

2. Vorrichtung (1) nach Anspruch 1, **dadurch gekennzeichnet, dass** mindestens eine der sich gegenüberliegenden Oberflächen (6,6a) der Siebplatten (2,4) eine Oberflächenwelligkeit im Bereich von 0,1 mm bis 10 mm, insbesondere 1 mm bis 5 mm aufweist.

3. Vorrichtung nach Anspruch 1 oder 2, **dadurch gekennzeichnet, dass** die Durchgangsöffnungen (3,3a) der jeweiligen Siebplatten (2,4) in seitlichem Abstand voneinander angeordnet sind.

4. Vorrichtung (1) nach einem der Ansprüche 1 bis 3, **dadurch gekennzeichnet, dass** der Durchmesser der Durchgangsöffnungen (3,3a) der jeweiligen Siebplatten (2,4) im Bereich von 1 bis 10 mm, insbesondere 2 bis 5 mm, liegt.

5. Vorrichtung (1) nach einem der Ansprüche 1 bis 4, **dadurch gekennzeichnet, dass** die Geometrie der Durchgangsöffnungen (3,3a) der Siebplatten (2,4) kreisförmig, elliptisch, dreieckig, quadratisch, rechteckig, fünfeckig oder sechseckig ist.

6. Vorrichtung (1) nach einem der Ansprüche 1 bis 5, **dadurch gekennzeichnet, dass** die Geometrie von jeder der Siebplatten (2,4) gleich ist.

7. Vorrichtung (1) nach einem der Ansprüche 1 bis 6, **dadurch gekennzeichnet, dass** der Filter aus Keramikrohmaterial hergestellt ist, insbesondere aus Keramikmaterial hergestellt ist, das ein Netzwerk von graphitisiertem Kohlenstoff und wahlweise Verstärkungsfasern umfasst.

8. Verfahren zum Erzeugen einer Filtervorrichtung (1) nach einem der Ansprüche 1 bis 7, umfassend die Schritte:
a) Pressen einer halbfeuchten Mischung, umfassend Keramikpulver und einen Vorläufer für eine graphitisierbare Bindung, Fasern und andere Additive in einer hydraulischen Presse, um eine erste und eine zweite perforierte Siebplatte (2,4) in Form einer Scheibe mit einem vorstehenden Rahmen (5,5a), mit einer gewellten Oberfläche (6,6a) (Erhebungen und Mulden) von mindestens einer der Innenseiten (6,6a) der Siebplatte (2,4) zu erhalten,
b) Verbinden der zwei Siebplatten (2,4) miteinander mittels des vorstehenden Rahmens (5,5a) unter Verwendung eines Keramik- oder Kohlenstoffbindemittels, so dass zwischen den beiden Platten (2,4) ein Zwischenraum oder eine Speicherkammer (7) gebildet wird, und
c) Brennen der zusammengesetzten Filtervorrichtung (1) in reduzierender oder nicht-oxidierender Atmosphäre bei einer Temperatur bis zu 1000°C, vorzugsweise zwischen 600°C und 700°C.

9. Verfahren nach Anspruch 8, **dadurch gekennzeichnet, dass** die Oberfläche (6,6a) in einem weiteren Schritt vor oder nach dem Brennen der Siebplatte (2,4) aufgeraut wird.

10. Verfahren nach Anspruch 8 oder 9, **dadurch gekennzeichnet, dass** die halbfeuchte Mischung einen Vorläufer mit graphitisierbarer Kohlenstoffbindung, Keramikpulver und andere Additive enthält.

11. Verfahren nach einem der Ansprüche 8 bis 10, **dadurch gekennzeichnet, dass** der Vorläufer bei einer Temperatur im Bereich von 500 bis 2000°C, insbesondere 500 bis 1000°C gebrannt wird.

## Revendications

1. Dispositif de filtre (1) pour la filtration d'acier fondu possédant un réseau lié de carbone graphitisé, contenant au moins deux plaques de passoire (2,4), chacune ayant une surface ondulée (6,6a) (pics et vallée) et un cadre faisant saillie (5,5a) jointes l'une à l'autre au niveau du cadre faisant saillie en formant un espace ou une chambre de réservoir.

2. Dispositif (1) selon la revendication 1, **caractérisé en ce qu'**au moins une des surfaces (6,6a) desdites plaques de passoire (2,4) se faisant face a une ondulation de surface dans la plage de 0,1 mm à 10 mm, en particulier de 1 mm à 5 mm.

3. Dispositif (1) selon la revendication 1 ou 2, **caractérisé en ce que** les trous de passage (3, 3a) des plaques de passoire respectives (2,4) sont espacés latéralement les uns des autres.

4. Dispositif (1) selon l'une des revendications 1 à 3, **caractérisé en ce que** le diamètre des trous de passage (3,3a) des plaques de passoire respectives (2,4) sont dans la plage de 1 à 10 mm, en particulier de 2 à 5 mm.

5. Dispositif (1) selon l'une des revendications 1 à 4, **caractérisé en ce que** la géométrie des trous de passage (3,3a) desdites plaques de passoire (2,4) est circulaire, elliptique, triangulaire, carrée, rectangulaire, pentagonale ou hexagonale.

6. Dispositif (1) selon l'une des revendications 1 à 5, **caractérisé en ce que** la géométrie de chacune des plaques de passoire (2,4) est identique.

7. Dispositif (1) selon l'une des revendications 1 à 6, **caractérisé en ce que** le filtre est fait d'une matière première céramique, en particulier fait d'un matériau céramique comprenant un réseau de carbone graphitisé et, en option, de fibres de renfort.

8. Une méthode pour produire un dispositif de filtre (1) selon l'une des revendications 1 à 7, comprenant les étapes de
a) pressage d'un mélange à moitié humide comprenant une poudre céramique et un précurseur de liaison graphitisable, des fibres et d'autres additifs dans une presse hydraulique afin d'obtenir une première et seconde plaque de passoire perforée (2,4) en forme de disque avec un cadre (5,5a) faisant saillie, avec une surface ondulée (6,6a) (pics et vallée) à au moins une des surfaces intérieures (6,6a) des plaques de passoire (2,4),
b) jonction desdites deux plaques (2,4) l'une à l'autre par le cadre faisant saillie (5,5a) en utilisant un liant carboné ou céramique afin de former un espace ou chambre de réservoir (7) entre les deux plaques (2,4) et
c) cuisson du dispositif de filtre (1) assemblé en atmosphère réductrice ou non-oxydante à une température jusqu'à 1000°C, de préférence entre 600°C et 700°C.

9. Méthode selon la revendication 8, **caractérisé en ce que** la surface (6,6a) est rendue rugueuse dans une étape supplémentaire avant la cuisson des plaques de passoire (2,4).

10. Méthode selon la revendication 8 ou 9, **caractérisé en ce que** ledit mélange à moitié humide contient un précurseur de liant carboné graphitisable, une poudre céramique et d'autres additifs.

11. Méthode selon l'une quelconque des revendications 8 à 10, **caractérisé en ce que** ledit précurseur est cuit à une température dans la plage de 500 à 2000°C, en particulier de 500 à 1000°C.
